# EUROPEAN PATENT APPLICATION

(11) **EP 4 717 629 A1**
(43) Date of publication of application: **01.04.2026**
(21) Application number: 25197333.5
(22) Date of filing: 21.08.2025
(51) Int. Cl.: B65D 81/127, B65D 1/34, B65D 25/20, B65D 25/24

(54) **CUSHIONING SHEET AND TRANSPORT CONTAINER**

(30) Priority: 30.09.2024 JP 2024171365
(71) Applicant: NOK Corporation, Tokyo 105-8585 (JP)
(72) Inventor: USAMI, Takashi, Kitaibaraki-shi, Ibaraki, 3191535 (JP)
(74) Representative: Global IP Europe Patentanwaltskanzlei

(57) **Abstract**

A cushioning sheet (40) is attachable to a container body (21) of a transport container (20). The container body (21) includes a facing portion (23a) facing in a first direction and a plurality of recesses (29, 36) recessed from the facing portion (23a). The first direction is orthogonal to a bottom (23) of the container body (21) and outward from the container body (21). The cushioning sheet (40) includes a sheet portion (50) formed from an elastomer. The sheet portion (50) includes a first surface (50a) to face in the first direction and a second surface (50b) to face the facing portion (23a) to at least partially cover the facing portion (23a). The cushioning sheet (40) includes a protrusion set (60) protruding from the second surface (50b) and including a plurality of protrusions (70, 80, 90, 100) integral with the sheet portion (50). The plurality of protrusions (70, 80, 90, 100) are fittable correspondingly into the plurality of recesses (29, 36).

## Description

### BACKGROUND

### 1. Technical Field

The present invention relates to a cushioning sheet and a transport container.

### 2. Description of the Background

A curable rubber sheet usable as a shock absorbing material in the logistics field is known as described in WO 2017/154660.

### BRIEF SUMMARY

When transport containers formed from resin are transported on a roller conveyor having metal rollers, the rollers and the transport containers collide with each other and generate noise. Such noise from collision between rollers and transport containers is particularly loud at a joint between an inclined conveyor having a transport surface that is vertically lower downstream in the transport direction and a horizontal conveyor located downstream from the inclined conveyor in the transport direction and having a transport surface extending in the horizontal direction. Noise from collision between rollers and transport containers can be unpleasant to operators working near the conveyors. To reduce such noise from collision between rollers and transport containers, cushioning sheets may be attached to the transport containers. Cushioning sheets for transport containers are to be easily positioned relative to transport containers and be easily removable from transport containers, or in other words, to be easily attachable and detachable. Cushioning sheets attached to transport containers with fasteners such as bolts involve concerns including increased costs or variations in quality such as the accuracy in attaching cushioning sheets. Cushioning sheets for transport containers are thus to include fewer components.

One or more aspects of the disclosure are directed to a cushioning sheet including fewer components and being easily attachable to and detachable from a container body.

An aspect of the disclosure provides a cushioning sheet attachable to a container body of a transport container, the container body including a facing portion facing in a first direction and a plurality of recesses recessed from the facing portion, the first direction being orthogonal to a bottom of the container body and outward from the container body, the cushioning sheet including:
a sheet portion comprising an elastomer, the sheet portion including a first surface to face in the first direction and a second surface to face the facing portion to at least partially cover the facing portion; and
a protrusion set protruding from the second surface and including a plurality of protrusions integral with the sheet portion, the plurality of protrusions being fittable correspondingly into the plurality of recesses.

The cushioning sheet according to the above aspect of the disclosure includes fewer components and is easily attachable to and detachable from the container body.

### BRIEF DESCRIPTION OF DRAWINGS

FIG. 1 is a perspective view of transport containers and a conveyor system according to an embodiment.
FIG. 2 is a side view of the transport containers and the conveyor system according to the embodiment.
FIG. 3 is a perspective view of a transport container according to the embodiment.
FIG. 4 is a plan view of the transport container according to the embodiment as viewed from below.
FIG. 5 is a plan view of a container body in the embodiment as viewed from below.
FIG. 6 is a perspective view of a corner of a facing portion of the container body according to the embodiment.
FIG. 7 is a perspective view of a cushioning sheet according to the embodiment.
FIG. 8 is an enlarged side view of a transport container and a conveyor system in a comparative example.
FIG. 9 is a perspective view of a cushioning sheet in a modification of the embodiment.
FIG. 10 is a plan view of a transport container in the modification of the embodiment as viewed from below.
FIG. 11 is a plan view of a transport container in a modification of the embodiment as viewed from below.
FIG. 12 is a plan view of a transport container in a modification of the embodiment as viewed from below.
FIG. 13 is a plan view of a transport container in a modification of the embodiment as viewed from below.
FIG. 14A is a table showing the specifications of cushioning sheets used for evaluation in examples and the evaluation results.
FIG. 14B is a graph showing the evaluation results of noise in the examples.

### DETAILED DESCRIPTION

Embodiments of the disclosure will be described below with reference to the drawings. The drawings may not be precisely drawn to scale and some features may be exaggerated or omitted.

Hereafter, one direction parallel to a horizontal plane is referred to as a positive U-direction. The direction of an axis extending in the positive U-direction is referred to as a U-direction. A direction parallel to a horizontal plane and orthogonal to the U-direction is referred to as a V-direction.

A direction along one edge of a rectangular bottom surface of a transport container is referred to as an X-direction. One direction in the X-direction is referred to as a positive X-direction. A direction opposite to the positive X-direction is referred to as a negative X-direction. A direction along the bottom surface of the rectangular transport container and orthogonal to the X-direction is referred to as a Y-direction. One direction in the Y-direction is referred to as a positive Y-direction. A direction opposite to the positive Y-direction is referred to as a negative Y-direction. A direction in which the bottom of the transport container faces a conveyor is referred to as a negative Z-direction. A direction opposite to the negative Z-direction is referred to as a positive Z-direction.

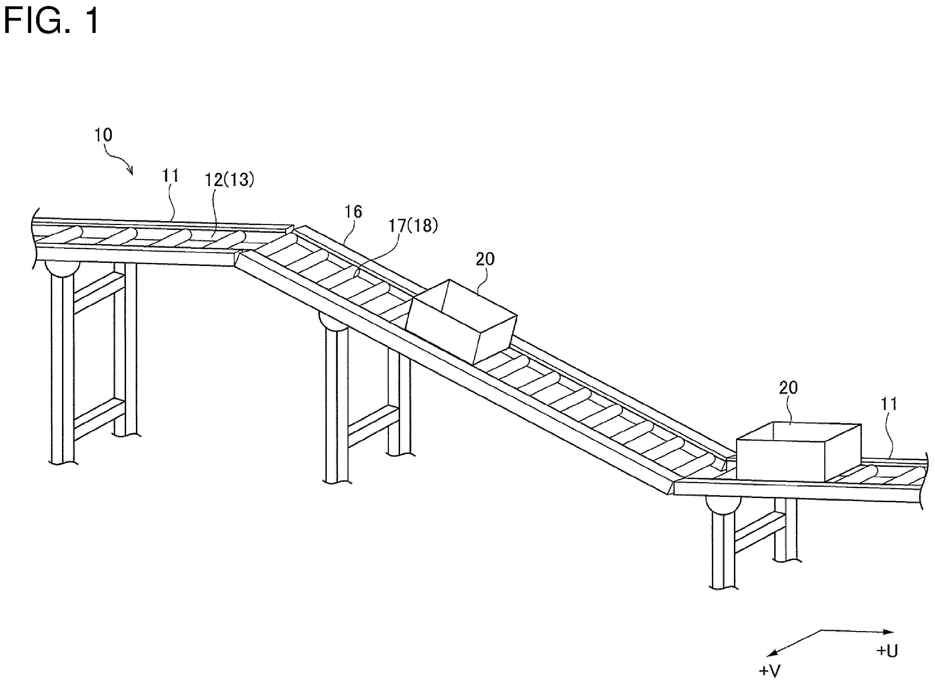

As shown in FIG. 1, a transport container 20 according to an embodiment of the disclosure is transportable by a conveyor system 10. The conveyor system 10 is used in, for example, a logistics warehouse. The conveyor system 10 in the embodiment includes first conveyors 11 and a second conveyor 16.

Each first conveyor 11 is a stationary roller conveyor with a first transport surface 12 extending in the horizontal direction. The first transport surface 12 is an imaginary plane extending in the U-direction. The first conveyor 11 can transport the transport container 20 on the first transport surface 12 in the positive U-direction along the first transport surface 12. The first conveyor 11 includes multiple first rollers 13.

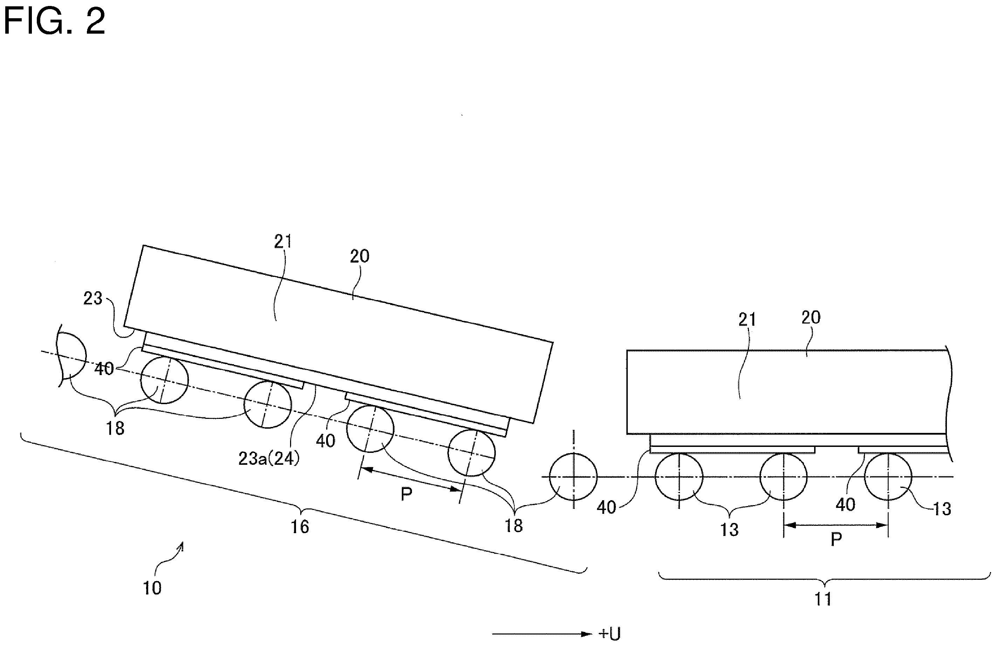

The first rollers 13 are each cylindrical and extend in the V-direction (refer to FIG. 2). The first rollers 13 are formed from metal. Each first roller 13 includes a support shaft (not shown) extending along its central axis. Each first roller 13 has its support shaft rotatably supported by a support frame of the first conveyor 11. The first rollers 13 are arranged in the U-direction at intervals of a predetermined pitch P. The pitch P is a distance between the support shafts of two adjacent first rollers 13. In other words, the first transport surface 12 is an imaginary surface extending in the direction in which the first rollers 13 are arranged and defined along tangent lines to the first rollers 13 tangential at vertically upper points of the first rollers 13.

The first rollers 13 are arranged with tolerances for unavoidable vertical misalignment with respect to the first transport surface 12, such as assembly tolerances.

The second conveyor 16 is a stationary roller conveyor with a second transport surface 17. As shown in FIG. 1, the second transport surface 17 is an imaginary plane defined as a UV plane that is inclined to be vertically lower in the positive U-direction. The second conveyor 16 can transport the transport container 20 on the second transport surface 17 in the positive U-direction along the second transport surface 17 in a direction inclined vertically downward. The second conveyor 16 has its two ends in the transport direction connected to two first conveyors 11 with different heights, with their transport surfaces being continuous with one another. The second conveyor 16 includes multiple second rollers 18.

The second rollers 18 are each cylindrical and extend in the V-direction (refer to FIG. 2). The second rollers 18 are formed from metal. Each second roller 18 includes a support shaft (not shown) extending along its central axis. Each second roller 18 has its support shaft rotatably supported by a support frame of the second conveyor 16. The second rollers 18 are arranged in a direction along the second transport surface 17 at intervals of the pitch P that is the same as the pitch P for the first rollers 13 in the first conveyor 11. In other words, the second transport surface 17 is an imaginary surface extending in the direction in which the second rollers 18 are arranged and defined along tangent lines to the second rollers 18 tangential at vertically upper points of the rollers 18.

The second rollers 18 are arranged with tolerances for unavoidable vertical misalignment with respect to the second transport surface 17, such as assembly tolerances.

The first conveyors 11 and the second conveyor 16 may each include a drive roller (not shown). Each drive roller is drivable with a drive (not shown) and rotates to transport the transport container 20 in contact with its upper part in the positive U-direction. Some or all of the first rollers 13 or the second rollers 18, or both may be drive rollers.

### Transport Container 20

The transport container 20 is a box for articles to be placed in. As shown in FIG. 2, the transport container 20 is transported on the transport surface of the conveyor system 10 with its bottom in contact with the rollers 13 and 18. As shown in FIGs. 2 to 4, the transport container 20 includes a container body 21 and multiple cushioning sheets 40.

### Container Body 21

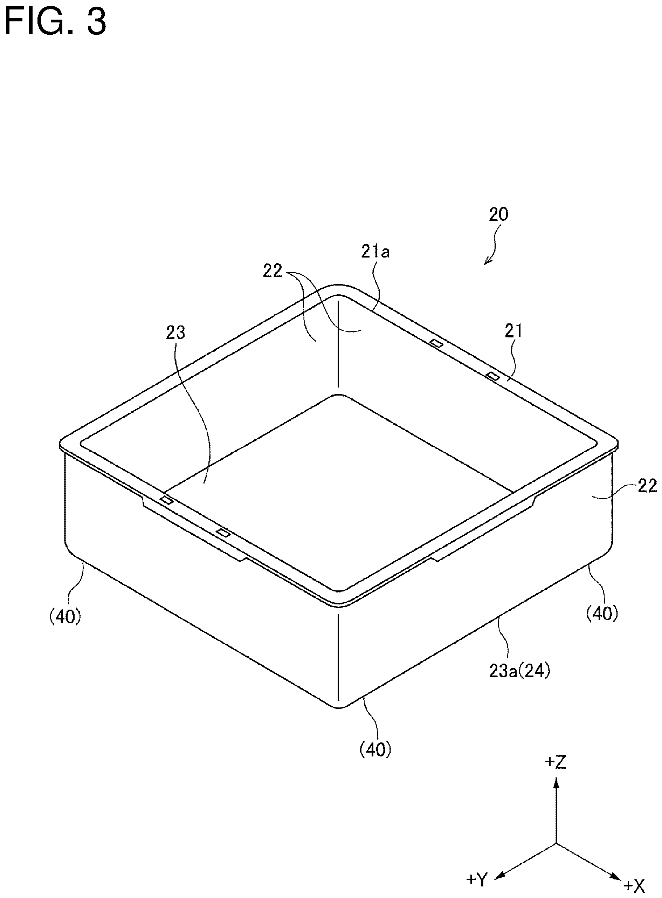

As shown in FIG. 3, the container body 21 is a substantially rectangular box that is open vertically upward when placed with the bottom extending in the horizontal direction. The container body 21 is formed from polyethylene. The container body 21 may be formed from any resin material other than polyethylene, such as polypropylene, polyethylene terephthalate (PET), or polyamide. The container body 21 is formed by vacuum molding. The container body 21 may be formed by any method other than vacuum molding, such as compression molding or injection molding. The container body 21 includes a bottom 23 and multiple side walls 22.

The bottom 23 is a rectangular plate parallel to an XY plane. The bottom 23 has edges parallel to the X-direction or the Y-direction. When the transport container 20 is placed on one of the first conveyors 11 or the second conveyor 16, the bottom 23 extends along the first transport surface 12 or the second transport surface 17. The bottom 23 extends with the X-direction aligned with the transport direction (U-direction) of the first conveyors 11 or the second conveyor 16. More specifically, when the conveyor system 10 transports the transport container 20 in the U-direction, the transport container 20 is transported in the X-direction relative to the conveyor system 10. In this case, a direction orthogonal to the X-direction and the Y-direction and in which the bottom 23 faces one of the first conveyors 11 or the second conveyor 16 is referred to as the negative Z-direction. The negative Z-direction is an example of a first direction. A direction opposite to the negative Z-direction is referred to as the positive Z-direction. In this case, the rollers 13 and 18 extend in the Y-direction.

The conveyor system 10 may have a structure in which the transport direction of the transport container 20 is not the X-direction and may be switched to the Y-direction or to a direction inclined with respect to the X-direction and the Y-direction. The transport container 20 is hereafter transported in the X-direction unless otherwise specified.

The bottom 23 includes a facing portion 23a that will be described in detail later.

As shown in FIG. 3, the side walls 22 are rectangular plates extending in the positive Z-direction from the respective edges of the bottom 23. In other words, the side walls 22 surround the bottom 23 and extend from the bottom 23 in a direction opposite to the transport surface 12 or 17. The container body 21 in the present embodiment includes four side walls 22.

The four side walls 22 define an opening 21a that is surrounded by the ends of the four side walls 22 in the positive Z-direction. The opening 21a is rectangular in a plan view in the Z-direction. The opening 21a in the present embodiment is square in a plan view in the Z-direction.

As shown in FIG. 2, the facing portion 23a protrudes in the negative Z-direction from the surface of the bottom 23 in the negative Z-direction. In other words, the facing portion 23a faces outward from the container body 21. When the transport container 20 is placed on one of the first conveyors 11 or the second conveyor 16, the facing portion 23a faces the first transport surface 12 or the second transport surface 17.

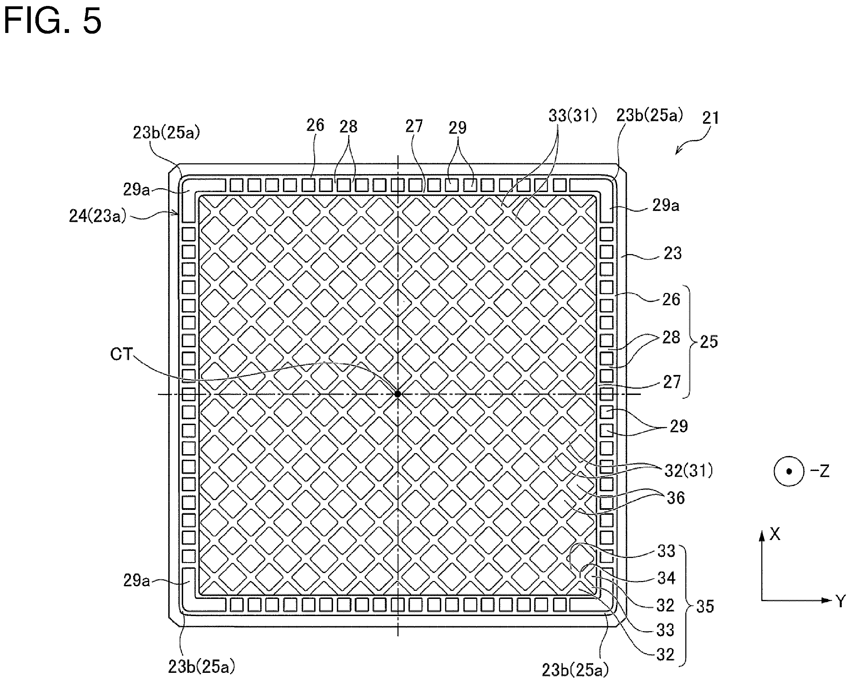

As shown in FIG. 5, the facing portion 23a in the present embodiment is rectangular in a plan view in the Z-direction. The facing portion 23a has a smaller outline than the opening 21a in a plan view. The facing portion 23a is located inward from the opening 21a in a plan view. The facing portion 23a in the present embodiment includes four corners 23b.

The facing portion 23a may have a shape symmetric about a center point (centroid) CT in a plan view. More specifically, as shown in FIG. 5, the facing portion 23a is divided into four quadrants by an imaginary line extending in the X-direction and an imaginary line extending in the Y-direction each through the center point CT. In this case, the facing portion 23a may have the same shape in one quadrant and in an adjacent quadrant rotated by 90 degrees about the center point CT. In this case, the facing portion 23a has its outline in one quadrant connecting smoothly with the outline in an adjacent quadrant. The facing portion 23a in the present embodiment has a square outline in a plan view.

For two container bodies 21 to be stacked in the Z-direction, the container body 21 in the positive Z-direction can be stacked on the container body 21 in the negative Z-direction with the facing portion 23a of the container body 21 in the positive Z-direction received in the opening 21a of the container body 21 in the negative Z-direction. In other words, one container body 21 is stackable on the other empty container body 21 in a stable arrangement.

The facing portion 23a in the present embodiment is in the shape of a grid of a reinforcement rib set 24.

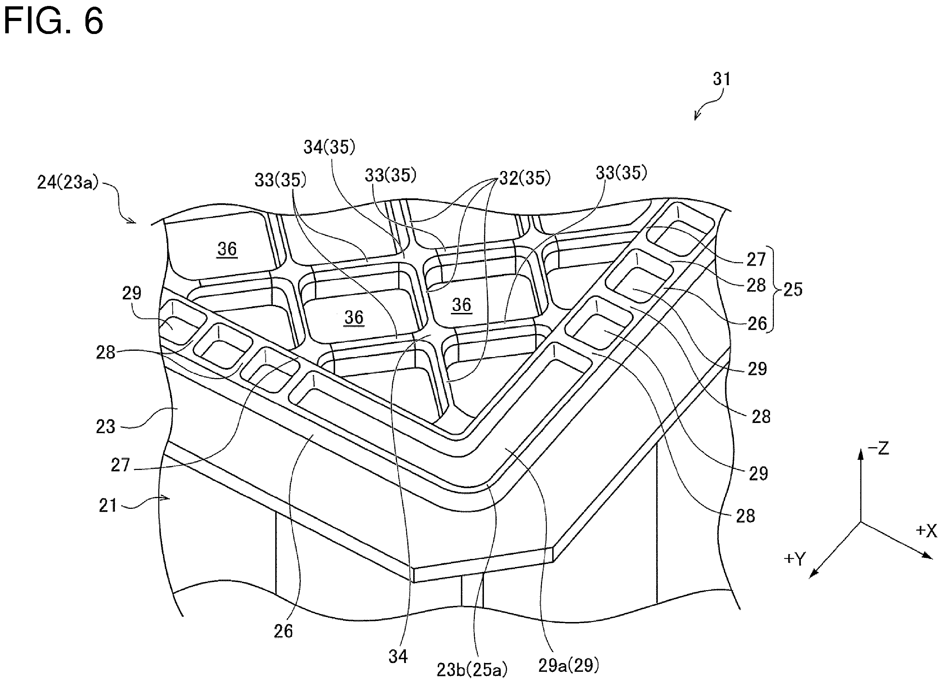

As shown in FIG. 6, the reinforcement rib set 24 includes multiple thin plates of ribs that extend from the surface of the bottom 23 in the negative Z-direction to either connect or intersect, or both connect and intersect with one another. The reinforcement rib set 24 reinforces the bottom 23. The reinforcement rib set 24 includes a first rib set 25 and a second rib set 31.

As shown in FIG. 5, the first rib set 25 is a rectangular frame that is an outer peripheral portion of the facing portion 23a in a plan view. The first rib set 25 includes an outer frame rib 26, an inner frame rib 27, and multiple partition ribs 28. The first rib set 25 further includes rib set corners 25a and multiple first recessed portions 29.

The outer frame rib 26 is a rectangular frame located outermost from the center point CT in a plan view.

The inner frame rib 27 is a rectangular frame located nearer the center point CT than the outer frame rib 26 in a plan view. The inner frame rib 27 surrounds the second rib set 31 in a plan view.

The partition ribs 28 are located between the outer frame rib 26 and the inner frame rib 27. The partition ribs 28 are arranged at predetermined intervals in a direction in which the outer frame rib 26 and the inner frame rib 27 extend. The partition ribs 28 are orthogonal to the outer frame rib 26 and the inner frame rib 27.

The rib set corners 25a are the corners of the first rib set 25 in the shape of a rectangular frame. The rib set corners 25a correspond to the corners 23b of the facing portion 23a.

Each first recessed portion 29 is rectangular and is surrounded by two partition ribs 28 that are adjacent to each other in the direction in which the outer frame rib 26 and the inner frame rib 27 extend, the outer frame rib 26, and the inner frame rib 27. In other words, the first rib set 25 is divided into the multiple first recessed portions 29 by the multiple partition ribs 28. The first recessed portions 29 are arranged in the direction in which the outer frame rib 26 and the inner frame rib 27 extend. In other words, the first recessed portions 29 are arranged along the surface of the bottom 23 in the negative Z-direction. The partition ribs 28 serve as partitions between the first recessed portions 29 arranged in the direction in which the outer frame rib 26 and the inner frame rib 27 extend. The partition ribs 28 are examples of partitions.

As shown in FIG. 6, the surface of the bottom 23 surrounded by the first recessed portions 29 is located in the positive Z-direction from the end of the first rib set 25 in the negative Z-direction. In other words, the surface of the bottom 23 surrounded by the first recessed portions 29 is recessed toward the bottom 23 from the first rib set 25 in the facing portion 23a. The first recessed portions 29 are examples of recesses.

As shown in FIG. 5, the second rib set 31 is located nearer the center point CT than the inner frame rib 27 in a plan view. The second rib set 31 includes multiple first diagonal ribs 32, multiple second diagonal ribs 33, and multiple intersections 34. The second rib set 31 further includes intersection rib sets 35. The second rib set 31 further includes multiple second recessed portions 36.

The first diagonal ribs 32 are straight ribs extending parallel to a first diagonal direction that is angled with respect to the X-direction in a plan view. In other words, the first diagonal ribs 32 extend in a diagonal direction with respect to the direction in which the transport container 20 is transported by one of the first conveyors 11 or the second conveyor 16. The first diagonal direction in the embodiment is angled by 45 degrees with respect to the X-direction. Each first diagonal rib 32 connects two sides of the inner frame rib 27. The first diagonal ribs 32 are arranged at predetermined intervals in a direction orthogonal to the first diagonal direction.

The second diagonal ribs 33 are straight ribs extending to intersect with the first diagonal ribs 32 in a plan view. In other words, the second diagonal ribs 33 extend in a second diagonal direction intersecting with the first diagonal direction. The second diagonal ribs 33 in the embodiment are orthogonal to the first diagonal ribs 32. The second diagonal ribs 33 intersect with the first diagonal ribs 32 and connect two sides of the inner frame rib 27. The second diagonal ribs 33 are arranged at predetermined intervals in the first diagonal direction.

The first diagonal ribs 32 and the second diagonal ribs 33 intersect at the intersections 34. The intersections 34 correspond to the first diagonal ribs 32 and the second diagonal ribs 33 in the second rib set 31.

Multiple intersection rib sets 35 correspond to the respective intersections 34. One intersection rib set 35 corresponding to one of the multiple intersections 34 will be described below more specifically. The intersection rib set 35 is in the shape of a cross including one intersection 34, two first diagonal ribs 32 around the intersection 34, and two second diagonal ribs 33 around the intersection 34. The first diagonal ribs 32 in the intersection rib set 35 are ribs crossing the intersection 34 of the multiple first diagonal ribs 32. The second diagonal ribs 33 in the intersection rib set 35 are ribs crossing the intersection 34 of the multiple second diagonal ribs 33.

Each second recessed portion 36 is rectangular and is surrounded by two adjacent first diagonal ribs 32 and two adjacent second diagonal ribs 33. More specifically, the second rib set 31 is divided into the second recessed portions 36 by the first diagonal ribs 32 and the second diagonal ribs 33. The second recessed portions 36 are arranged in the first diagonal direction or the second diagonal direction. In other words, the second recessed portions 36 are arranged in a direction along the surface of the bottom 23 facing in the negative Z-direction. The first diagonal ribs 32 and the second diagonal ribs 33 serve as partitions between the second recessed portions 36 arranged in the first diagonal direction or the second diagonal direction. The first diagonal ribs 32 and the second diagonal ribs 33 are examples of partitions.

As shown in FIG. 6, the surface of the bottom 23 surrounded by the second recessed portions 36 is located in the positive Z-direction from the end of the second rib set 31 in the negative Z-direction. In other words, the surface of the bottom 23 surrounded by the second recessed portions 36 is recessed toward the bottom 23 from the second rib set 31 in the facing portion 23a. The second recessed portions 36 are examples of recesses.

### Cushioning Sheet 40

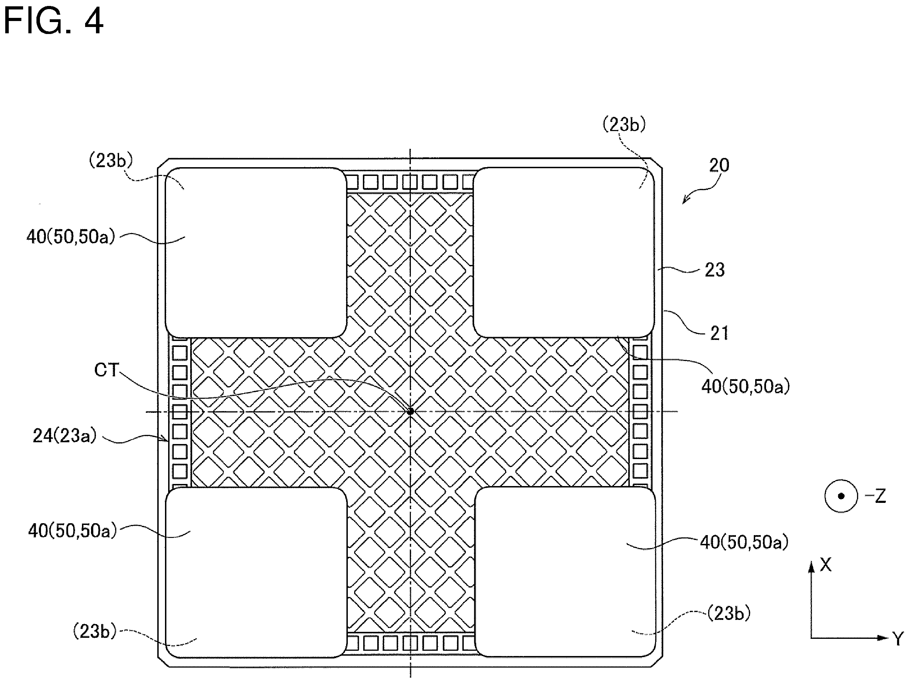

As shown in FIGs. 2 and 4, the cushioning sheets 40 are attachable to the facing portion 23a of the container body 21. When the transport container 20 is placed on one of the first conveyors 11 or the second conveyor 16, the cushioning sheets 40 come in contact with the first rollers 13 or the second rollers 18, or both.

As shown in FIG. 4, the cushioning sheets 40 are attached to the container body 21 to overlap the corners 23b of the facing portion 23a (in other words, the rib set corners 25a of the reinforcement rib set 24) in a plan view. The four cushioning sheets 40 are attached to the container body 21 in the embodiment.

The cushioning sheets 40 each have a maximum length in the X-direction less than 50% of the maximum length in the X-direction of the facing portion 23a, and a maximum length in the Y-direction less than 50% of the maximum length in the Y-direction of the facing portion 23a. In other words, the maximum dimension of a sheet portion 50 (described later) in each of the X-direction and the Y-direction is less than 50% of the maximum dimension of the facing portion 23a in each of the X-direction and the Y-direction.

When the transport container 20 placed on the conveyor system 10 is transported in the positive X-direction, the maximum length of each cushioning sheet 40 in the X-direction may be greater than the pitch P of the rollers 13 and 18 in the conveyor system 10. In other words, the sheet portion 50 may have a maximum length in the X-direction greater than the pitch P of the rollers 13 and 18.

The cushioning sheets 40 are attached to the container body 21 without being displaced in a direction more away from the center point CT than the respective corners 23b of the facing portion 23a in a plan view. In other words, the cushioning sheets 40 are attached to the container body 21 without protruding outward from the facing portion 23a in a plan view. More specifically, as shown in FIG. 2, the cushioning sheets 40 are attached to the container body 21 without protruding farther than the facing portion 23a downstream in the transport direction of the transport container 20. Thus, the cushioning sheets 40 are located inward from the opening 21a in a plan view.

The cushioning sheets 40 are formed from an elastomer. The elastomer may be, for example, nitrile rubber (NBR), fluorine rubber (FKM), acrylic rubber (ACM), silicone rubber, or urethane rubber. The elastomer may have a Shore hardness of 50A or greater. The cushioning sheets 40 may be formed from urethane rubber with high shock absorption.

Each cushioning sheet 40 includes a sheet portion 50 and a protrusion set 60. The sheet portion 50 and the protrusion set 60 are integral.

### Sheet portion 50

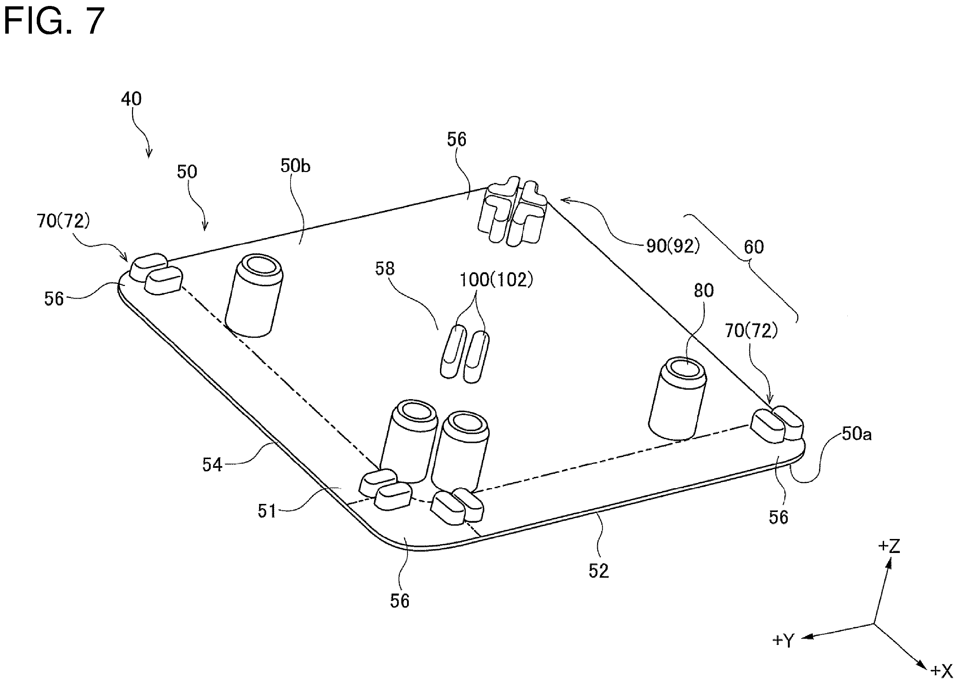

As shown in FIGs. 4 and 7, the sheet portion 50 is a rectangular plate parallel to the XY plane. As shown in FIG. 4, the sheet portion 50 in the present embodiment is substantially square in a plan view in the Z-direction. As shown in FIG. 7, the sheet portion 50 in the present embodiment includes four sheet corners 56. The sheet portion 50 further includes a sheet center portion 58. The sheet center portion 58 overlaps the centroid in a plan view. As shown in FIG. 4, the sheet portion 50 is located with its edges parallel to the edges of the facing portion 23a in a plan view.

The sheet portion 50 further includes a first surface 50a and a second surface 50b. As shown in FIG. 4, the first surface 50a faces in the negative Z-direction. In other words, the first surface 50a is in contact with the conveyor system 10. As shown in FIG. 7, the second surface 50b faces in the positive Z-direction. In other words, the second surface 50b comes in contact with the facing portion 23a. In other words, as shown in FIG. 4, the sheet portion 50 at least partially covers the facing portion 23a.

As shown in FIG. 7, the sheet portion 50 further includes a sheet periphery 51, a first end portion 52, a second end portion 54.

The sheet periphery 51 extends along the outer periphery of the sheet portion 50 that is rectangular in a plan view. The sheet periphery 51 is apart from the sheet center portion 58.

The first end portion 52 is an end most away from the center point CT of the facing portion 23a in the X-direction when the cushioning sheet 40 is attached to the facing portion 23a and extends in the Y-direction. When the transport container 20 is transported in the positive X-direction, the first end portion 52 of the cushioning sheet 40 located away from the center point CT in the positive X-direction serves as the leading end of the transport container 20 facing in the transport direction.

The second end portion 54 is an end most away from the center point CT of the facing portion 23a in the Y-direction when the cushioning sheet 40 is attached to the facing portion 23a and extends in the X-direction. When the transport container 20 is transported in the positive Y-direction, the second end portion 54 of the cushioning sheet 40 located away from the center point CT in the positive Y-direction serves as the leading end of the transport container 20 facing in the transport direction.

The sheet corners 56 are the corners of a rectangle each rounded into an arc shape in a plan view. The edge portion of each sheet corner 56 smoothly connects the first end portion 52 and the second end portion 54. The first end portion 52 has a length in the Y-direction shorter than the maximum length of the sheet portion 50 in the Y-direction. The second end portion 54 has a length in the X-direction shorter than the maximum length of the sheet portion 50 in the X-direction.

### Protrusion Set 60

As shown in FIG. 7, the protrusion set 60 includes multiple protrusions protruding from the second surface 50b in the positive Z-direction. The protrusions included in the protrusion set 60 correspond to the first recessed portions 29 or the second recessed portions 36 in the facing portion 23a. Each protrusion in the protrusion set 60 is fittable into the corresponding first recessed portion 29 or the corresponding second recessed portion 36 when the cushioning sheet 40 is attached to the facing portion 23a. Each protrusion in the protrusion set 60 elastically deforms when fitted into the first recessed portion 29 or the second recessed portion 36. This applies a tension to the facing portion 23a to hold the cushioning sheet 40 on the facing portion 23a.

The protrusion set 60 includes first protrusions 70, second protrusions 80, third protrusions 90, and fourth protrusions 100.

The first protrusions 70 correspond to some of the partition ribs 28. In other words, each first protrusion 70 corresponds to either of two adjacent first recessed portions 29. The first protrusions 70 in the present embodiment include at least two wall protrusions 72. The wall protrusions 72 extend in the direction in which the partition ribs 28 extend and in the positive Z-direction from the second surface 50b of the sheet portion 50. In a plan view in the Z-direction, the two wall protrusions 72 overlap the respective two first recessed portions 29 that are adjacent to each other across a partition rib 28.

When each cushioning sheet 40 is attached to the facing portion 23a, the two wall protrusions 72 are fitted into the respective two first recessed portions 29 adjacent to each other while deforming elastically in response to contact with the partition rib 28. The two wall protrusions 72 then apply a tension to the partition rib 28 held between the two wall protrusions 72. The two wall protrusions 72 are examples of catchers that hold the partition rib 28 serving as a partition.

For the cushioning sheet 40 to be attached to the facing portion 23a including multiple partition ribs 28, the protrusion set 60 may include multiple first protrusions 70 corresponding to one or more of the multiple partition ribs 28. In the present embodiment, the first protrusions 70 are located to correspond to the partition ribs 28 that overlap the two ends of the first end portion 52 in the Y-direction and the two ends of the second end portion 54 in the X-direction. In other words, the first protrusions 70 in the present embodiment are located on each of the sheet corners 56 excluding the sheet corner 56 nearest the center point CT of the facing portion 23a when the cushioning sheet 40 is attached to the facing portion 23a.

Each second protrusion 80 corresponds to one of the second recessed portions 36. Each second protrusion 80 overlaps one of the second recessed portions 36 in a plan view in the Z-direction. The second protrusions 80 in the present embodiment are cylindrical and extend in the positive Z-direction from the second surface 50b of the sheet portion 50.

When the cushioning sheet 40 is attached to the facing portion 23a, each second protrusion 80 is fitted into the corresponding second recessed portion 36 while deforming elastically in response to contact with the first diagonal ribs 32 and the second diagonal ribs 33 defining the second recessed portion 36. The second protrusion 80 then applies a tension to the first diagonal ribs 32 and the second diagonal ribs 33 defining the second recessed portion 36. In other words, each second protrusion 80 has an interference with the second recessed portion 36.

For the cushioning sheet 40 to be attached to the facing portion 23a including multiple second recessed portions 36, the protrusion set 60 may include multiple second protrusions 80 corresponding to some of the multiple second recessed portions 36.

The third protrusions 90 correspond to one of the intersection rib sets 35. More specifically, the third protrusions 90 correspond to the second recessed portions 36 adjacent to one of the multiple intersections 34. The third protrusions 90 in the present embodiment include at least four V-shaped protrusions 92. The four V-shaped protrusions 92 correspond to the four second recessed portions 36 adjacent to the intersection 34. Each V-shaped protrusion 92 extends in the positive Z-direction from the second surface 50b of the sheet portion 50 in a V shape bent at a point of contact with the intersection 34 in a plan view. Two diagonal sides of the V-shaped protrusion 92 each extend in the direction in which the first diagonal ribs 32 or the second diagonal ribs 33 extend in a plan view.

When the cushioning sheet 40 is attached to the facing portion 23a, the two V-shaped protrusions 92 adjacent to each other across the first diagonal rib 32 in a plan view are fitted into the respective second recessed portions 36 adjacent to each other while deforming elastically in response to contact with the first diagonal rib 32. The two V-shaped protrusions 92 then apply a tension to the first diagonal rib 32 held between the two V-shaped protrusions 92.

When the cushioning sheet 40 is attached to the facing portion 23a, the two V-shaped protrusions 92 adjacent to each other across the second diagonal rib 33 in a plan view are fitted into the respective second recessed portions 36 adjacent to each other while deforming elastically in response to contact with the second diagonal rib 33. The two V-shaped protrusions 92 then apply a tension to the second diagonal rib 33 held between the two V-shaped protrusions 92.

The four V-shaped protrusions 92 are examples of catchers that hold the first diagonal rib 32 or the second diagonal rib 33 serving as a partition.

The third protrusions 90 in the present embodiment are located at the sheet corner 56 nearest the center point CT of the facing portion 23a when the cushioning sheet 40 is attached to the facing portion 23a. More specifically, the third protrusions 90 and the first protrusions 70 in the present embodiment are arranged along the sheet periphery 51 of the sheet portion 50.

The fourth protrusions 100 correspond to one of the first diagonal ribs 32 or one of the second diagonal ribs 33. More specifically, the fourth protrusions 100 correspond to two adjacent second recessed portions 36 of the multiple second recessed portions 36. The fourth protrusions 100 in the present embodiment include at least two wall protrusions 102. The wall protrusions 102 extend in the direction in which the first diagonal ribs 32 or the second diagonal ribs 33 extend and in the positive Z-direction from the second surface 50b of the sheet portion 50. The two wall protrusions 102 overlap the respective second recessed portions 36 adjacent to each other across the first diagonal rib 32 or the second diagonal rib 33 in a plan view in the Z-direction.

When the cushioning sheet 40 is attached to the facing portion 23a, the two wall protrusions 102 are fitted into the respective two second recessed portions 36 adjacent to each other while deforming elastically in response to contact with the first diagonal rib 32 or the second diagonal rib 33. The two wall protrusions 102 then apply a tension to the first diagonal rib 32 or the second diagonal rib 33 held between the two wall protrusions 102. The two wall protrusions 102 are examples of catchers that hold the first diagonal rib 32 or the second diagonal rib 33 serving as a partition.

The fourth protrusions 100 in the present embodiment may be located on the sheet center portion 58. The fourth protrusions 100 in the present embodiment may be located away from each of the sheet corners 56 in a plan view.

In attaching the multiple cushioning sheets 40 to the corners 23b, adjusting the orientation of each cushioning sheet 40 to match the angle of the corresponding corner 23b with respect to the center point CT may position the protrusion set 60 on the facing portion 23a. More specifically, the orientation of the cushioning sheet 40 attached to the upper right corner 23b in FIG. 4 may be the orientation of the cushioning sheet 40 at the upper left corner 23b in the figure rotated clockwise by 90 degrees. In particular, when the facing portion 23a is symmetric about the center point CT of the facing portion 23a, adjusting the orientation of each cushioning sheet 40 to match the angle of the corresponding corner 23b with respect to the center point CT may position the protrusion set 60 of the cushioning sheet 40 on the facing portion 23a.

### Advantages and Effects

The advantages and the effects of the transport container 20 and the cushioning sheet 40 will now be described.

The cushioning sheet 40 includes the protrusion set 60. The protrusion set 60 deforms elastically in response to being fitted into the first recessed portions 29 or the second recessed portions 36, thus applying a tension to the facing portion 23a to hold the cushioning sheet 40 on the facing portion 23a. The cushioning sheet 40 thus can be attached to the facing portion 23a of the container body 21 easily. The cushioning sheet 40 also can be detached from the container body 21 easily. The cushioning sheet 40 is thus easily attachable to and detachable from the container body 21. The protrusion set 60 is integral with the sheet portion 50. This reduces the number of components in the cushioning sheet 40 attachable to the container body 21. In other words, the cushioning sheet 40 is easily attachable to and detachable from the container body 21 with fewer components.

The protrusion set 60 includes the first protrusions 70 that apply a tension to a partition rib 28 held between the first protrusions 70 when the protrusion set 60 is attached to the facing portion 23a. The cushioning sheet 40 is thus attachable to the container body 21 including the partition ribs 28 more securely.

The third protrusions 90 or the fourth protrusions 100, or both corresponding to the first diagonal ribs 32 or the second diagonal ribs 33, or both can produce the same effects as the first protrusions 70.

The protrusion set 60 includes second protrusions 80 each with an interference with the second recessed portions 36 to apply a tension. The cushioning sheet 40 is thus attachable to the container body 21 including the second recessed portions 36 more securely.

The protrusion set 60 includes the third protrusions 90 that apply a tension to the first diagonal ribs 32 and the second diagonal ribs 33 held between the third protrusions 90 around the intersection 34. The transport direction of the transport container 20 may be switched between the X-direction, the Y-direction, and directions oblique to the X-direction and the Y-direction (various directions including the directions of the first diagonal ribs 32 and the second diagonal ribs 33) depending on the structure of the conveyor system 10.

When, for example, the protrusion set applies a tension, through the first protrusions 70 holding the corresponding partition rib 28, to the partition rib 28 extending in the X-direction alone, the tension contains a small component in the X-direction. In this case, vibration or impact, for example, applied during transportation of the transport container in the X-direction may cause the cushioning sheets attached to the transport container to come off from the container body 21 under the tension containing a small component in the X-direction. In other words, when the protrusion set holding the partitions extending in one direction alone applies a tension to the partitions, the cushioning sheets may come off from the container body 21 during transportation of the transport container in that direction in which the partitions extend.

The protrusion set 60 in the embodiment includes the third protrusions 90 that apply a tension to the first diagonal ribs 32 and the second diagonal ribs 33 extending in directions oblique to the X-direction and the Y-direction. Thus, the cushioning sheet 40 is less likely to come off the container body 21 during transportation when the transport direction of the container body 21 is switchable between multiple directions.

In particular, the third protrusions 90 apply a tension to the first diagonal ribs 32 at an angle of 45 degrees with respect to the X-direction and the second diagonal ribs 33 orthogonal to the first diagonal ribs 32 held between the third protrusions 90. Thus, the cushioning sheet 40 is less likely to come off from the container body 21 during transportation when the transport direction of the container body 21 is switchable between the X-direction and the Y-direction.

The protrusion set 60 includes the fourth protrusions 100 located in the sheet center portion 58. When the protrusions are arranged along the sheet periphery 51 alone, the sheet center portion 58 of each cushioning sheet 40 attached to the facing portion 23a may lift from the facing portion 23a. This may reduce the tightness of the cushioning sheet 40 with the facing portion 23a, thus reducing the advantageous effects of the cushioning sheet 40. However, the fourth protrusions 100 allow the cushioning sheet 40 to be attached to the container body 21 with the tension applied to a portion of the facing portion 23a corresponding to the sheet center portion 58. Thus, the sheet center portion 58 of the cushioning sheet 40 is less likely to lift from the facing portion 23a.

The first end portion 52 of the cushioning sheet 40 has a length in the Y-direction shorter than the maximum length of the sheet portion 50 in the Y-direction. When the transport container 20 is transported in the X-direction by the rollers 13 and 18 extending in the Y-direction, the contact surface between the first end portion 52 and the rollers 13 and 18 is smaller than when the length of the cushioning sheet in the Y-direction at the leading end is equal to the maximum length of the sheet portion 50 in the Y-direction. The cushioning sheet 40 thus reduces noise generated between the transport container 20 and the rollers 13 and 18 when the transport container 20 is transported in the X-direction.

The second end portion 54 of the cushioning sheet 40 has a length in the X-direction shorter than the maximum length of the sheet portion 50 in the X-direction. When the transport container 20 is transported in the Y-direction by the rollers 13 and 18 extending in the X-direction, the contact surface between the second end portion 54 and the rollers 13 and 18 is smaller than when the length of the cushioning sheet in the X-direction at the leading edge is equal to the maximum length of the sheet portion 50 in the X-direction. The cushioning sheet 40 thus reduces noise generated between the transport container 20 and the rollers 13 and 18 when the transport container 20 is transported in the Y-direction.

The cushioning sheet 40 thus reduces noise generated between the transport container 20 and the rollers 13 and 18 during transportation of the transport container 20.

The elastomer for the cushioning sheet 40 has a Shore hardness of 50A or greater. The cushioning sheet 40 thus more effectively reduces noise generated between the transport container 20 and the rollers 13 and 18 during transportation of the transport container 20.

The elastomer for the cushioning sheet 40 is urethane rubber. Urethane rubber has high shock absorption. The cushioning sheet 40 thus reduces vibrations applied to the transport container 20 during transportation of the transport container 20.

The length of the cushioning sheet 40 in the X-direction and the Y-direction is greater than the pitch P of the rollers 13 and 18. In the example described below, the transport container 20 is transported on the rollers 13 and 18 in the direction in which the rollers 13 and 18 are arranged. In this case, when the length of the cushioning sheet in the transport direction is shorter than the pitch P, the cushioning sheet does not come in contact with two or more adjacent rollers 13 and 18 on the transport surfaces 12 and 17. The cushioning sheet with a length in the transport direction shorter than the pitch length P attached to the container body 21 may lower the transportability of the transport container on the roller conveyor.

The length of the cushioning sheet 40 in the transport direction of the transport container 20 transported on the roller conveyor is greater than the pitch P. Thus, the cushioning sheet 40 is in contact with two or more adjacent rollers 13 and 18 on the transport surfaces 12 and 17. Thus, the cushioning sheet 40 can maintain the transportability of the transport container 20 on the roller conveyor.

The cushioning sheets 40 are attached to the container body 21 without protruding farther than the facing portion 23a downstream in the transport direction of the transport container 20. When the cushioning sheets attached to the transport container protrude farther than the facing portion 23a downstream in the transport direction of the transport container during transportation on the roller conveyor, the sheet portions 50 may be curled up at their leading ends in the transport direction due to contact with the rollers 13 and 18. When the leading ends of the sheet portions 50 in the transport direction are held in tight contact with the facing portion 23a by the protrusion set 60, as in the cushioning sheet 40, the sheets are less likely to be curled up due to contact with the rollers 13 and 18. The cushioning sheets 40 in contact with the rollers 13 and 18 are thus less likely to be curled up during transportation on the roller conveyor.

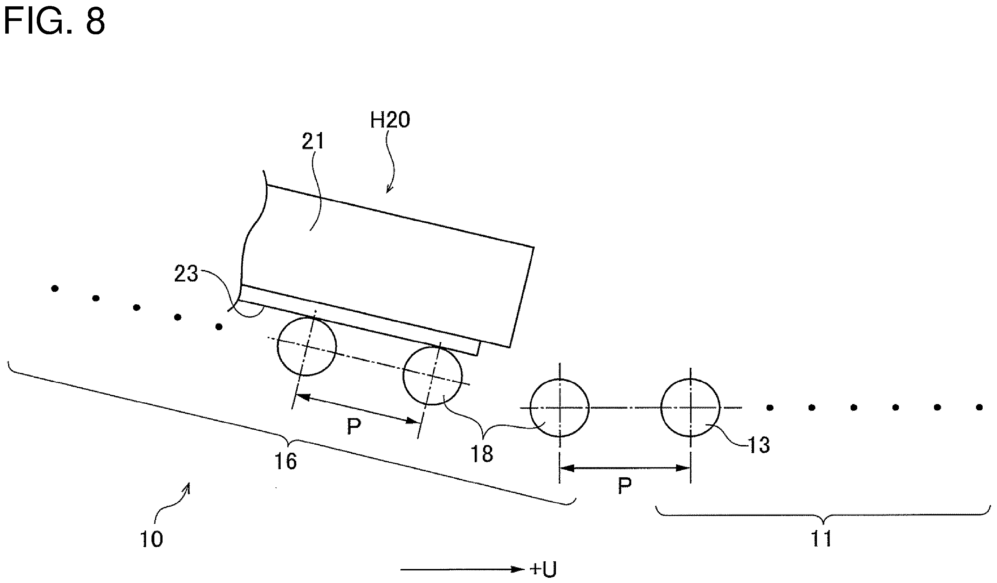

The transport container 20 includes the cushioning sheets 40 formed from an elastomer. As shown in FIG. 8, when the container body 21 is in contact with the rollers 13 and 18 during transportation on the roller conveyor, noise is generated from collision between the rollers and the transport container. The transport container 20 thus reduces noise generated between transport containers and rollers during transportation on roller conveyors.

In the transport container 20, the cushioning sheets 40 are attached to overlap the corners 23b of the facing portion 23a. The transport container 20 can thus maintain the transportability of the transport container. The sheet portion 50 included in each cushioning sheet 40 has a length in the X-direction and the Y-direction shorter than 50% of the length of the facing portion 23a in the X-direction and the Y-direction. The cushioning sheet 40 can thus be handled more easily when attached to the transport container 20.

In the transport container 20, the cushioning sheets 40 are attached to the container body 21 including the opening 21a and the facing portion 23a, without protruding from the facing portion 23a in a plan view. The transport container 20 with the cushioning sheets 40 being attached can thus be stacked stably on another empty transport container 20 (or the container body 21).

Although one or more embodiments of the present invention are described above, the present invention is not limited to the above embodiments, and may be modified, changed, or improved in various manners within the scope of the technical idea of the present invention.

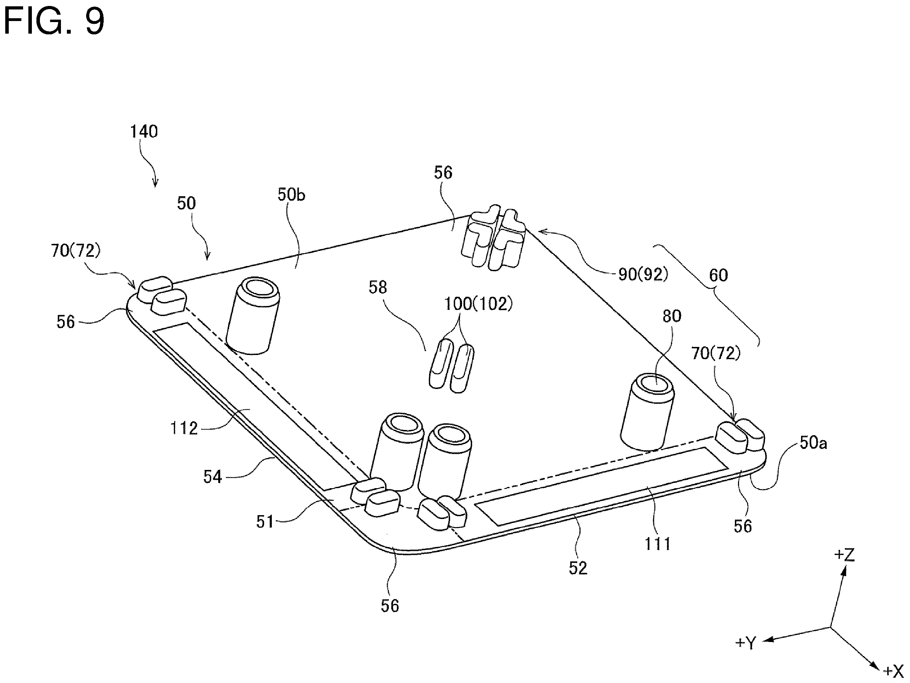

The cushioning sheets 40 are attached to the container body 21 by fitting the protrusion set 60 into the first recessed portions 29 or the second recessed portions 36. However, as shown in FIG. 9, the cushioning sheets according to one or more embodiments of the disclosure may be attached to the container body 21 with the protrusion set and an adhesive member such as double-sided adhesive tape.

A cushioning sheet 140 shown in FIG. 9 further includes a double-sided tape piece 111 and a double-sided tape piece 112, unlike the cushioning sheet 40. The double-sided tape piece 111 is located on the second surface 50b of the sheet portion 50 along the sheet periphery 51 near the first end portion 52. The double-sided tape piece 112 is located on the sheet portion 50 along the sheet periphery 51 near the second end portion 54. The double-sided tape piece 111 includes a first adhesive surface (not shown) and a second adhesive surface 111b. The double-sided tape piece 112 includes a first adhesive surface (not shown) and a second adhesive surface 112b. The first adhesive surfaces are attachable to the sheet portion 50. The second adhesive surfaces 111b and 112b are attachable to the container body 21. The double-sided tape pieces 111 and 112 are attached to the sheet portion 50 without overlapping the protrusion set 60 in a plan view. The double-sided tape pieces 111 and 112 are examples of an adhesive member. The cushioning sheet 140 including the double-sided tape pieces 111 and 112 improve the tightness of contact with the container body 21.

The adhesive member according to one or more embodiments of the disclosure may be located on the entire second surface 50b of the sheet portion 50 without overlapping the protrusion set 60 in a plan view.

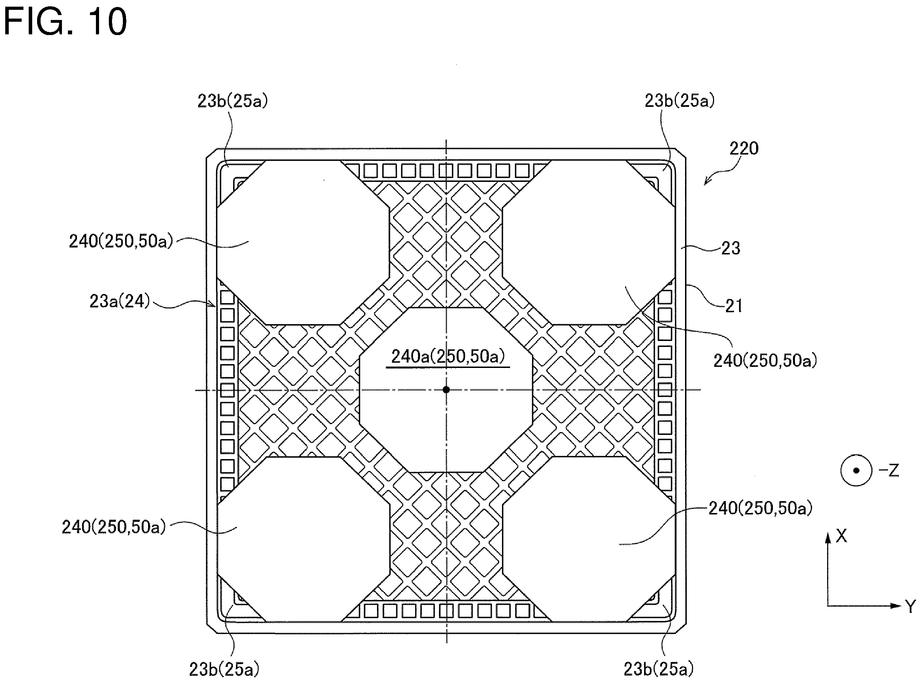

The cushioning sheets 40 are attached to the transport container 20 to overlap the corners 23b of the facing portion 23a in a plan view. However, as in a transport container 240 shown in FIG. 10, the transport container according to one or more embodiments of the disclosure may further include a cushioning sheet attached to a center portion of the facing portion 23a. The center portion of the facing portion 23a refers to a portion around the center point CT of the facing portion 23a located away from each of the corners 23b. In other words, in the transport container according to one or more embodiments of the disclosure, the cushioning sheets may be attached with one or more sheet portions at least partially overlapping the center portion of the facing portion 23a in a plan view.

When the cushioning sheets are attached to the corners 23b of the facing portion 23a alone, the center portion of the facing portion 23a may deform under its weight. More specifically, when an article is placed in the transport container 20, the center portion of the facing portion 23a may deform downward under the weight of the article. When the sheet portion in one or more embodiments of the disclosure is attached to at least partially overlap the center portion of the facing portion 23a in a plan view as in the transport container 240, the sheet portion supports the center portion of the facing portion 23a to reduce such deformation. The transport container 240 thus reduces deformation of the center portion of the container body 21.

The sheet portion 50 in the cushioning sheet 40 includes the sheet corners 56 that are corners of a rectangle each rounded into an arc shape in a plan view. However, in one or more embodiments of the disclosure, the sheet portion may not include the corners of a rectangle (sheet corners) each rounded into an arc shape. The sheet corners may have any shape that allows a width orthogonal to the transport direction of the leading end to be shorter than the maximum width of the sheet portion.

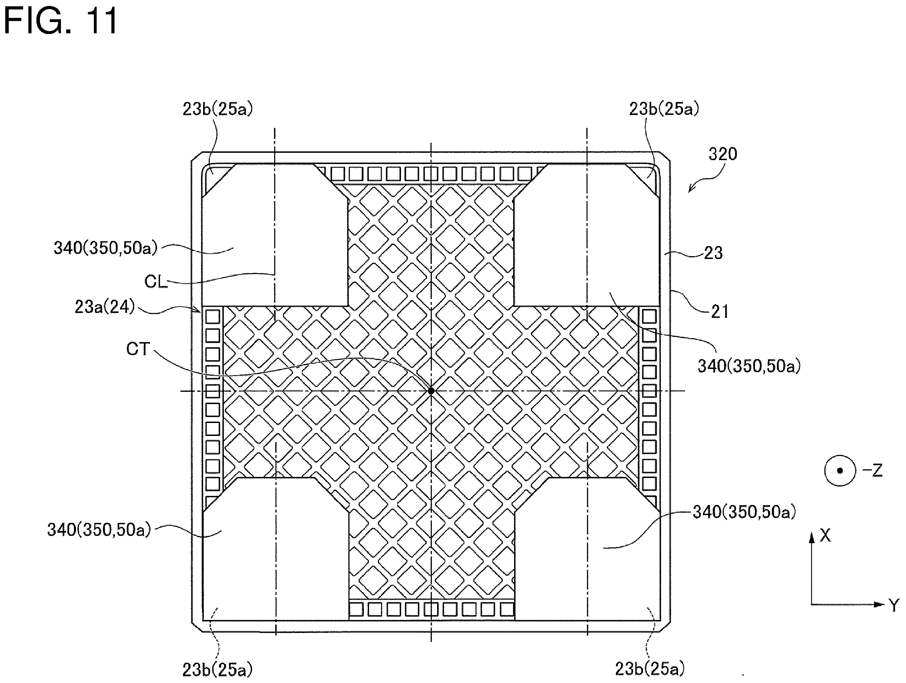

As shown in, for example, FIGs. 10, 11, and 12, in one or more embodiments of the disclosure, the sheet portion may include the corners (sheet corners) downstream in the transport direction being a rectangle chamfered in lines oblique to the transport direction in a plan view. More specifically, the sheet portion in one or more embodiments of the disclosure may be in the shape of a polygon other than a quadrangle in a plan view. The sheet portion in one or more embodiments of the disclosure may also be quadrangular without its corners rounded or chamfered in a plan view.

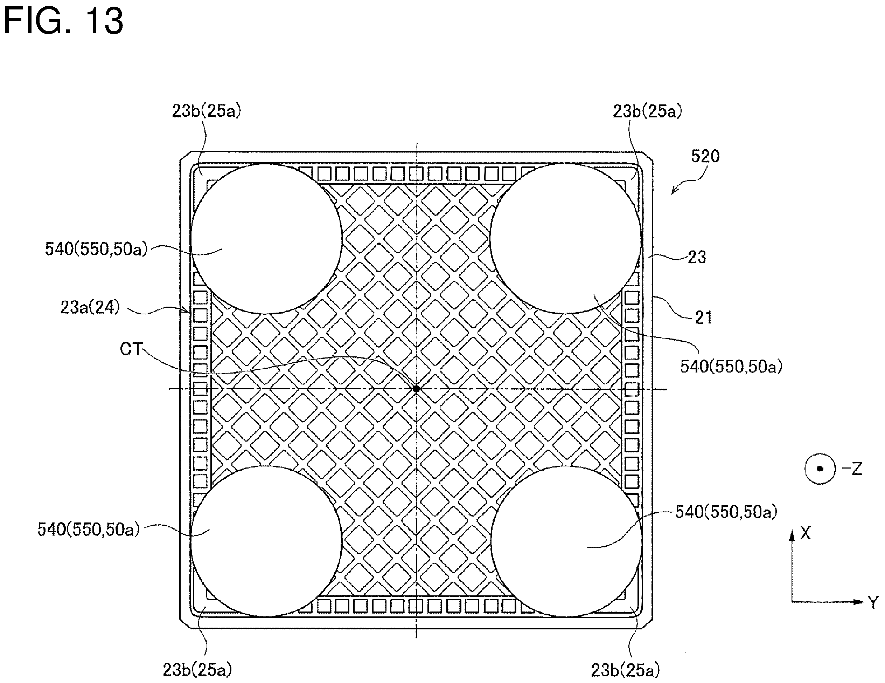

As shown in FIG. 13, the sheet portion in one or more embodiments of the disclosure may be circular in a plan view.

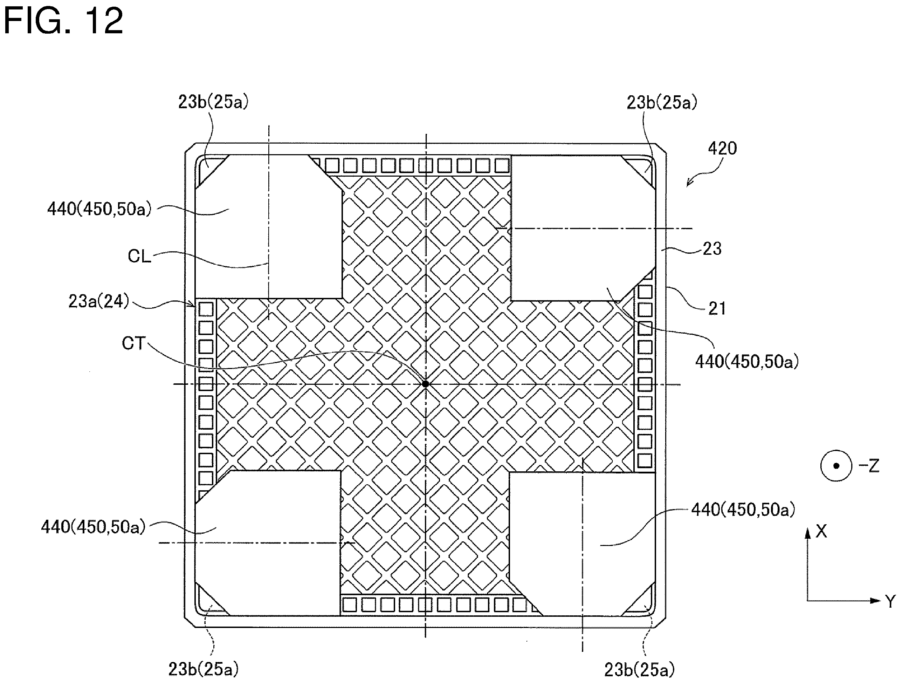

The sheet portion 50 is substantially square in a plan view in one or more embodiments. More specifically, the sheet portion 50 is point symmetric about the center (centroid) of the sheet portion 50 in a plan view. However, the sheet portion in one or more embodiments of the disclosure may not be point symmetric. As shown in FIG. 12, the sheet portion in one or more embodiments of the disclosure may be line symmetric with respect to a center line CL of a sheet portion 450, as in a cushioning sheet 440. In this case, in adjusting the orientation of each cushioning sheet 440 to match the angle of the corresponding corner 23b with respect to the center point CT to position the protrusion set 60 on the facing portion 23a, the orientation of the cushioning sheet 440 with respect to the corner 23b can be visually identified easily. The sheet corner nearest the center point CT of the facing portion 23a in one or more embodiments of the disclosure may have a shape different from the shape of the other sheet corners. The sheet corner farthest from the center point CT of the facing portion 23a in one or more embodiments of the disclosure may have a shape different from the shape of the other sheet corners.

The first diagonal direction of the first diagonal ribs 32 is at an angle of 45 degrees with respect to the X-direction in one or more embodiments. However, the first diagonal angle of the first diagonal direction with respect to the X-direction in one or more embodiments of the disclosure may not be 45 degrees.

The second diagonal ribs 33 are orthogonal to the first diagonal ribs 32 in one or more embodiments. However, the second diagonal ribs in one or more embodiments of the disclosure may intersect with the first diagonal ribs 32 without being orthogonal to the first diagonal ribs 32.

The second rib set 31 includes the multiple first diagonal ribs 32 and the multiple second diagonal ribs 33 in one or more embodiments. However, the second rib set in one or more embodiments of the disclosure may further include one or more third diagonal ribs. The third diagonal ribs extend in a direction different from the directions in which the first diagonal ribs and the second diagonal ribs extend.

The intersection rib sets 35 are cross-shaped in one or more embodiments. However, the intersection rib sets in one or more embodiments of the disclosure may not be cross-shaped. The intersection rib sets in one or more embodiments of the disclosure may each include multiple rib members extending along multiple diagonals of an imaginary polygon other than a quadrangle. The intersection rib sets in one or more embodiments of the disclosure may each include an intersection defined as a centroid of an imaginary polygon other than a quadrangle, and multiple ribs extending radially from the intersection toward vertices. The intersection rib sets according to one or more embodiments of the disclosure may include multiple ribs defining recesses in a honeycomb pattern.

The first protrusions 70 and the third protrusions 90 in the embodiment are located on the respective sheet corners 56 in the cushioning sheet 40. However, the first protrusions in one or more embodiments of the disclosure may each be at any position other than the sheet corners 56 corresponding to any of the partition ribs 28. The third protrusions in one or more embodiments of the disclosure may be at any position other than the sheet corners 56 corresponding to any of the intersection rib sets 35.

The fourth protrusions 100 in the embodiment may be located in the sheet center portion 58 of the cushioning sheet 40. However, the fourth protrusions in one or more embodiments of the disclosure may be at any position other than the sheet center portion 58 corresponding to any two adjacent second recessed portions 36 of the multiple second recessed portions 36.

The transport container 20 is transported on the stationary conveyor system 10 including the multiple rollers 13 and 18 in one or more embodiments. However, the conveyor in one or more embodiments of the disclosure is not limited to a stationary roller conveyor. The conveyor in one or more embodiments of the disclosure may be an automatic guided vehicle (AGV) or an autonomous mobile robot (AMR) including a transport surface with multiple rollers on which the transport container is placeable.

### Examples

To demonstrate noise reduction using the cushioning sheet according to one or more embodiments of the disclosure, the transport containers in examples of the disclosure and a transport container in a comparative example were transported in one horizontal direction on a roller conveyor. In the evaluation, noise during transportation was measured with the material, rubber hardness, thickness, and the shapes of the cushioning sheet corners varied between the examples, and the levels of vibration in the transport container were evaluated. In the noise evaluation, the noise level (dB) was measured three times under the same conditions, and the average of the three measured levels of noise (dB) was calculated. To evaluate the levels of vibration, the vibration of the transport container in the examples was qualitatively evaluated with reference to the vibration of the transport container in the comparative example described later.

In the comparative example against the examples, the noise and the vibration levels in the transport container during transportation were evaluated with no cushioning sheets attached to the container body.

The container body is substantially square with each side having a length of 485 mm in a plan view. The side walls of the container body have a height of 170 mm.

The facing portion is substantially square with each side having a length of 465 mm in a plan view. The facing portion has a height of 10 mm. The facing portion is in the shape of a grid of the reinforcement rib set as in the embodiment.

Four cushioning sheets are attached to the four corners of the facing portion.

The sheet portion in each cushioning sheet is substantially square (rectangular) with each side having a length of 150 mm in a plan view.

The roller conveyor has a pitch of 100 mm between the rollers.

When the cushioning sheet is a rectangle with right-angled corners in a plan view, the width of the cushioning sheet at its leading end in the transport direction is equal to the maximum width of the cushioning sheet.

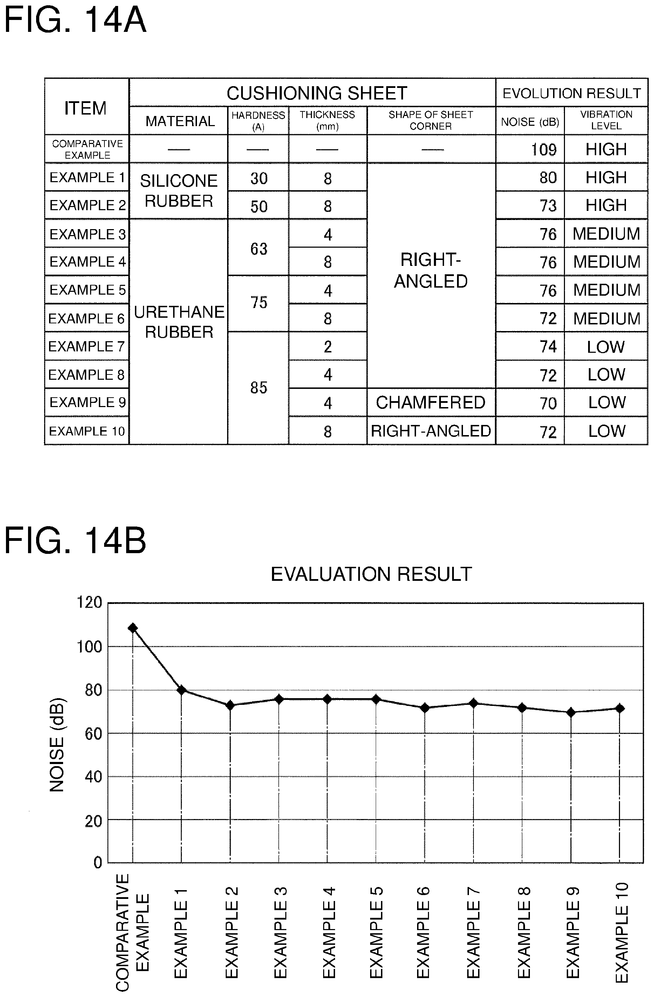

FIG. 14A is a table showing the specifications of the cushioning sheets used in evaluation in the examples and the evaluation results of noise and vibration levels in the examples and the comparative example. FIG. 14B is a graph showing the evaluation results of noise in the examples and the comparative example.

The evaluation results for examples 2 to 10 show that the noise during transportation is reduced by 30% or greater in examples with the cushioning sheet with the elastomer having a Shore hardness of 50A or greater as compared with the comparative example with no cushioning sheets. In particular, the evaluation results for example 9 show that noise during transportation is the lowest in the example with the chamfered sheet corners as compared with the comparative example. More specifically, the noise during transportation in example 9 is reduced by 35% as compared with the comparative example with no cushioning sheets.

The evaluation results in examples 3 to 10 show that attaching cushioning sheets formed from urethane rubber lowers the vibration level as compared with the comparative example with no cushioning sheets and the examples with the cushioning sheets formed from silicone rubber (examples 1 and 2). The vibration level is greatly lowered using urethane rubber with a Shore hardness of 85A as compared with the comparative example. This results from the high shock absorption of urethane rubber.

### Reference Signs List

10 conveyor system
11 first conveyor
13 first roller
16 second conveyor
18 second roller
20 transport container
21 container body
21a opening
22 side wall
23 bottom
23a facing portion
23b corner
24 reinforcement rib set
25 first rib set
25a rib set corner
26 outer frame rib
27 inner frame rib
28 partition rib (example of partition)
29 first recessed portion (example of recess)
29a corner recessed portion
31 second rib set
32 first diagonal rib
33 second diagonal rib
34 intersection
35 intersection rib set
36 second recessed portion (example of recess)
40 cushioning sheet
50 sheet portion
50a first surface
50b second surface
51 sheet periphery
52 first end portion
54 second end portion
56 sheet corner
58 sheet center portion
60 protrusion set
70 first protrusion
80 second protrusion
90 third protrusion
100 fourth protrusion

## Claims

1. A cushioning sheet attachable to a container body of a transport container, the container body including a facing portion facing in a first direction and a plurality of recesses recessed from the facing portion, the first direction being orthogonal to a bottom of the container body and outward from the container body, the cushioning sheet comprising:
a sheet portion comprising an elastomer, the sheet portion including a first surface to face in the first direction and a second surface to face the facing portion to at least partially cover the facing portion; and
a protrusion set protruding from the second surface and including a plurality of protrusions integral with the sheet portion, the plurality of protrusions being fittable correspondingly into the plurality of recesses.

2. The cushioning sheet according to claim 1, wherein
the plurality of recesses include recesses arranged in an arrangement direction along the second surface,
the container body includes a partition separating the plurality of recesses arranged in the arrangement direction, and
the protrusion set includes first protrusions to apply a tension to the partition held between the first protrusions.

3. The cushioning sheet according to claim 1 or claim 2, wherein
the protrusion set includes a second protrusion having an interference with at least one of the plurality of recesses to apply a tension.

4. The cushioning sheet according to any one of claims 1 to 3, wherein
the facing portion includes a reinforcement rib set extending in the first direction from the bottom of the container body, the reinforcement rib set including
a first diagonal rib extending in a first diagonal direction oblique to a transport direction of the transport container in a plane along the bottom,
a second diagonal rib extending in a second diagonal direction intersecting with the first diagonal direction in the plane along the bottom, and
an intersection at which the first diagonal rib and the second diagonal rib intersect, and
the protrusion set includes third protrusions to apply a tension to the first diagonal rib and the second diagonal rib held between the third protrusions around the intersection.

5. The cushioning sheet according to claim 4, wherein
the transport direction is one of a front-rear direction of the transport container or a lateral direction orthogonal to the front-rear direction,
the first diagonal rib is at an angle of 45 degrees with respect to the front-rear direction, and
the second diagonal rib is orthogonal to the first diagonal rib.

6. The cushioning sheet according to any one of claims 1 to 5, wherein
the sheet portion includes a sheet center portion and a sheet periphery,
the plurality of protrusions include a protrusion located along the sheet periphery in the sheet portion, and
the protrusion set includes a fourth protrusion in the sheet center portion.

7. The cushioning sheet according to any one of claims 1 to 6, further comprising:
an adhesive member including a first adhesive surface attachable to the sheet portion and a second adhesive surface attachable to the container body.

8. The cushioning sheet according to any one of claims 1 to 7, wherein
the sheet portion includes a leading end facing in a transport direction of the transport container, and
a width of the leading end orthogonal to the transport direction is shorter than a maximum width of the sheet portion.

9. The cushioning sheet according to any one of claims 1 to 8, wherein
the elastomer has a Shore hardness of 50A or greater.

10. The cushioning sheet according to any one of claims 1 to 9, wherein
the elastomer is urethane rubber.

11. The cushioning sheet according to any one of claims 1 to 10, wherein
the transport container is transported on a conveyor including a plurality of rollers arranged in a transport direction of the transport container at intervals of a predetermined pitch, and the transport container is in contact with the plurality of rollers during transportation on the conveyor, and
the sheet portion has a length in the transport direction greater than the pitch.

12. The cushioning sheet according to any one of claims 1 to 11, wherein
the transport container is transported on a conveyor including a plurality of rollers arranged in a transport direction of the transport container at intervals of a predetermined pitch, and the transport container is in contact with the plurality of rollers during transportation on the conveyor, and
the sheet portion is attached to the container body without protruding farther than the facing portion downstream in the transport direction of the transport container.

13. A transport container transportable on a conveyor including a plurality of rollers arranged in a transport direction, the transport container being in contact with the plurality of rollers during transportation on the conveyor, the transport container comprising:
a container body, the container body including
a facing portion to face a transport surface of the conveyor, and
a plurality of recesses recessed from the facing portion; and
the cushioning sheet according to any one of claims 1 to 12, the cushioning sheet being attachable to the container body.

14. The transport container according to claim 13, wherein
the transport container includes a plurality of the cushioning sheets,
the facing portion has a plurality of corners corresponding to the plurality of cushioning sheets,
each of the plurality of cushioning sheets includes the sheet portion having a length and a width less than 50% of a length and a width of the facing portion, and
the plurality of cushioning sheets are attached to overlap the plurality of corners of the facing portion.

15. The transport container according to claim 13 or claim 14, wherein
the cushioning sheet is attached with the sheet portion at least partially overlapping a center portion of the facing portion in a plan view.

16. The transport container according to any one of claims 13 to 15, wherein
the container body includes
a bottom,
a plurality of side walls surrounding the bottom and extending from the bottom in a direction opposite to the transport surface, and
an opening surrounded by ends of the plurality of side walls opposite to the bottom,
the facing portion protrudes from the bottom in a direction opposite to the plurality of side walls and is located inside the opening in a plan view, and
the cushioning sheet is attached without protruding from the facing portion in a plan view.
